# EUROPÄISCHE PATENTANMELDUNG

(11) **EP 4 843 755 A1**
(43) Veröffentlichungstag der Anmeldung: **25.11.2026**
(21) Anmeldenummer: 25177563.1
(22) Anmeldetag: 20.05.2025
(51) Int. Cl.: B29C 65/20

(54) **VERFAHREN ZUM VERSCHWEISSEN VON HYGROSKOPISCHEN KUNSTSTOFFTEILEN**

(71) Anmelder: Georg Fischer Rohrleitungssysteme AG, 8201 Schaffhausen (CH)
(72) Erfinder: Gutierrez, Mariano, 8280 Kreuzlingen (CH); Engesser, Benedikt, 78073 Hochemmingen (DE); Rösch, Jürgen, 79853 Lenzkirch (DE)
(74) Vertreter: Fenner, Seraina

(57) **Zusammenfassung**

Verfahren zum Verschweissen von hygroskopischen Kunststoffteilen (1) vorzugsweise Rohrleitungskomponenten mittels einer Stumpfschweissmaschine, wobei die beiden Kunststoffteile in koaxialer Lage zueinander mittels Spannvorrichtung (9) eingespannt und fixiert werden, wobei die sich gegenüberliegenden Stirnseiten der Kunststoffteile mittels eines dazwischen bringbaren Hobels plangehobelt werden und die Kunststoffteilenden mittels eines dazwischen bringbaren Heizspiegels (2) getrocknet und aufgeschmolzen werden, wobei anschliessend an das Aufschmelzen, die Kunststoffteilenden zusammengefügt werden, wobei sich die Temperatur des Heizspiegels vom Trocknen bis hin zum Erreichen der abschliessenden Schmelztemperatur verändert.

## Beschreibung

Die Erfindung betrifft ein Verfahren zum Verschweissen von hygroskopischen Kunststoffteilen vorzugsweise Rohrleitungskomponenten mittels einer Stumpfschweissmaschine, wobei die beiden Kunststoffteile in koaxialer Lage zueinander mittels Spannvorrichtung eingespannt und fixiert werden, wobei die sich gegenüberliegenden Stirnseiten der Kunststoffteile mittels eines dazwischen bringbaren Hobels plangehobelt werden und die Kunststoffteilenden mittels eines dazwischen bringbaren Heizspiegels getrocknet und aufgeschmolzen werden, wobei anschliessend an das Aufschmelzen, die Kunststoffteilenden zusammengefügt werden.

Aus dem Stand der Technik sind solche Verfahren zum Verschweissen von Kunststoffteilen bekannt jedoch werden dazu thermoplastische Kunststoffe verwendet, die nicht hygroskopisch sind.

Die EP 0 899 083 offenbart ein erfindungsgemässes Verfahren, jedoch würde sich dieses für hygroskopische Kunststoffe nicht eignen, ausser es würde vorher eine Trocknung der Kunststoffteile erfolgen. Aus dem Stand der Technik ist bekannt, dass eine solche Trocknung als separater, vorgängiger zusätzlicher Arbeitsschritt durchgeführt wird, meist in einem Wärmeschrank, um sicherzustellen, dass der Kunststoff keine bzw. kaum noch Feuchtigkeit enthält, denn diese würde bei einer Schweissung Feuchtigkeitsblasen hervorrufen. Dies erfordert entsprechend einen hohen zeitlichen wie energieintensiven Aufwand, um hygroskopische Kunststoffteile miteinander verschweissen zu können.

Die EP 4 424 498 A1 offenbart ein Trocknungsverfahren von hygroskopischen Kunststoffteilen, wobei die Kunststoffteile in einer Stumpfschweissmaschine sich gegenüberliegend eingespannt sind. Um vor dem Schweissen zuerst eine Trocknung durchzuführen, wird der Abstand der Stirnseite zum Heizspiegel vergrössert und die Temperatur am Heizspiegel bleibt konstant. Ist die Trocknung beendet, werden die Kunststoffteile näher an den Heizspiegel herangefahren, wodurch sie einer höheren Temperatur ausgesetzt sind, obwohl die Temperatur des Heizspiegels nicht verändert wurde und der Schmelzvorgang beginnt. Nachteilig hierbei ist, dass der Vorgang sich nicht exakt steuern lässt.

Es ist Aufgabe der Erfindung ein Verfahren vorzuschlagen, das ermöglicht hygroskopische Kunststoffteile miteinander zu verschweissen, ohne dass vorab eine separate Trocknung der Kunststoffteile erfolgen muss, um das Kunststoffteil zu entfeuchten, wodurch eine erhebliche Zeitersparnis erzielt werden kann, sowie einen überwachbaren und sicheren Prozess zu gewährleisten, wodurch eine den Anforderungen entsprechende Schweissung erzielt und eine Blasenbildung vermieden werden kann.

Diese Aufgabe wird erfindungsgemäss dadurch gelöst, dass sich die Temperatur des Heizspiegels vom Trocknen bis hin zum Erreichen der abschliessenden Schmelztemperatur verändert.

Das erfindungsgemässe Verfahren zum Verschweissen von hygroskopischen Kunststoffteilen vorzugsweise Rohrleitungskomponenten wird mittels einer Stumpfschweissmaschine vorzugsweise eine IR-Schweissmaschine durchgeführt. Dazu werden zwei sich gegenüberliegende Kunststoffteile in koaxialer Lage zueinander mittels einer Spannvorrichtung eingespannt und fixiert. Die sich gegenüberliegenden Stirnseiten der Kunststoffteile werden mittels eines dazwischen bringbaren Hobels plangehobelt. Anschliessend werden die Kunststoffteilenden mittels eines dazwischen bringbaren Heizspiegels getrocknet und aufgeschmolzen. Nach dem Aufschmelzen werden die Kunststoffteilenden zusammengefügt. Beim erfindungsgemässen Verfahren wird dabei die Temperatur des Heizspiegels vom Beginn des Trocknens bis hin zum Erreichen der abschliessenden Schmelztemperatur bzw. zur abschliessenden Schmelztiefe verändert. Vorzugsweise verändert sich die Temperatur nicht konstant von Beginn des Trocknens bis hin zum Erreichen der benötigten Schmelze bzw. Schmelztiefe, sondern in unterschiedlichen Phasen in denen unterschiedliche Effekte erzielt werden sollen. Dabei wird beachtet, dass immer zuerst eine vollständige Trocknung über eine Tiefe entlang der Längsachse ausgehend von der Stirnseite bzw. über eine Länge des Kunststoffteils erzielt wird, bevor eine Aufschmelzung beginnt. Dadurch wird sichergestellt, dass die Trocknungstiefe der Schmelztiefe immer vorauseilt und das Ende der Trocknungstiefe einen vorgegebenen Abstand zum Ende der Schmelztiefe nicht unterschreitet. Dies bildet sich im Zeit-Temperatur-Diagramm dadurch ab, dass sich die Linie der Schmelztiefe nicht mit der Linie der Trocknungstiefe schneidet bzw. die Linie der Schmelztiefe unterhalb der Linie der Trocknungstiefe verläuft und einen vorgegebenen Abstand nicht unterschreitet.

Als vorteilhaft hat sich gezeigt, wenn die Temperatur des Heizspiegels konstant überwacht und geregelt wird. Dadurch wird eine optimale Trocknung und eine anschliessende Aufschmelzung erzielt. Durch die genaue Regelung und Überwachung der Temperatur am Heizspiegel kann gewährleistet werden, dass ein Aufschmelzen erst in der Tiefe entlang der Längsachse des Kunststoffteils stattfindet, in der zuvor eine vollständige Trocknung erfolgt ist. Zudem ist es vorteilhaft, wenn auch die Temperatur an den Kunststoffteilen vorzugsweise die zu verschweissenden Enden überwacht wird.

Es ist vorteilhaft, wenn die Temperatur des Heizspiegels über separat regelbare Heizzonen am Heizspiegel geregelt wird. Vorzugsweise weist der Heizspiegel unabhängig regelbare Heizzonen oder Heizkreise auf, die unabhängig voneinander geregelt werden. Dies gewährleistet eine gleichmässige Trocknung und Aufschmelzung, so dass der Trockenbereich bzw. die Trockentiefe und der Aufschmelzbereich bzw. die Schmelztiefe sich jeweils möglichst gleichmässig über das zylindrische Kunststoffteil erstreckt. Dadurch dass die Wärme nach oben steigt, wird für den Schweissvorgang der Heizspiegel beispielsweise im oberen Bereich weniger erhitzt, wodurch eine gleichmässige Erstreckung der Trocknungs- oder Schmelztiefe entlang der Längsachse des Kunststoffteils erfolgt.

Als vorteilhaft hat sich gezeigt, wenn die Temperatur des Heizspiegels von Beginn des Trocknens bis hin zum Erreichen der benötigten Schmelztiefe erhöht wird. Während des Trocknens soll ein Aufschmelzen des Kunststoffteils vermieden werden, ansonsten würden aufgrund der noch vorhandenen Feuchtigkeit im Kunststoffteil Blasen entstehen. Erst wenn gewährleistet ist, dass der Bereich vollständig getrocknet ist, wird mit dem Aufschmelzen, was vorzugsweise eine Temperaturerhöhung zur Folge hat, begonnen.

Als bevorzugte Ausführungsform hat sich gezeigt, wenn der Temperaturverlauf der Heizspiegeltemperatur von Beginn des Trocknens bis hin zum Erreichen der gewünschten vollständigen Schmelztiefe ansteigt. Der Trocknungsvorgang erfolgt entsprechend bei einer tieferen Temperatur als das Aufschmelzen. Nach dem beginnenden Trocknen wird die Temperatur, sobald eine vollständige Trocknung einer definierten Tiefe ausgehend der Stirnseite des Kunststoffteils entlang der Längsachse erreicht ist, erhöht.

Vorzugsweise weist der Temperaturverlauf der Heizspiegeltemperatur von Beginn des Trocknens bis hin zur abschliessenden Schmelztiefe unterschiedliche Phasen auf. Die Phasen werden über eine Funktion der Zeit und Temperatur definiert, welche entsprechend auf das Material und die Dimension abgestimmt sind. Diese Funktionen sind vorzugsweise der Steuerung hinterlegt, sodass bei der Eingabe oder Erkennung der Dimension und des Materials des zu verschweissenden Kunststoffteils die Stumpfschweissmaschine sich autonom einstellt bzw. die passende Funktion auswählt.

Als vorteilhaft hat sich gezeigt, wenn während einer ersten Phase die Trocknung des Kunststoffteils von der Stirnseite bis in einer ersten Trocknungstiefe erfolgt.

Es ist vorteilhaft, wenn die Temperatur des Heizspiegels, während einer ersten Phase konstant gehalten wird. Die Temperatur während der ersten Phase zum Trocknen liegt vorzugsweise tiefer als die abschliessende Schmelztemperatur. Die erste Phase wird dazu genutzt, um die erste Trocknungstiefe vollständig zu trocknen. Dazu liegt die Trocknungstemperatur des Heizspiegels vorzugsweise deutlich unter der abschliessenden Schmelztemperatur, um ein Aufschmelzen vor dem vollständigen Trocknen zu vermeiden. Als vorteilhaft hat sich gezeigt, wenn die erste Trocknungstemperatur des Heizspiegels bereits über dem Schmelzpunkt des Materials liegt. Dennoch ist gewährleistet, dass vor dem Beginnen des Aufschmelzens eine vollständige Trocknung erzielt wird, da aufgrund der Distanz des Heizspiegels zum Kunststoffteil die Wärme am Kunststoffteil geringer als am Heizspiegel ist. Um den Prozess möglichst zeitoptimiert durchzuführen, liegt die Trocknungstemperatur am Heizspiegel in der ersten Phase vorzugsweise über dem Schmelzpunkt des Materials aber unterhalb der abschliessenden Schmelztemperatur. Selbstverständlich kann der Prozess bzw. die erste Phase auch mit einer Trocknungstemperatur unterhalb des Materialschmelzpunkts durchgeführt werden, dies ist abhängig vom zu verschweissenden Kunststoffteil. Wenn die gewünschte Trocknungstiefe erreicht ist und die Stirnseite sich beginnt aufzuschmelzen oder das Ende der Schmelztiefe unterschreitet einen vorgegebenen Abstand zum Ende der Trocknungstiefe, startet die zweite Phase des Temperaturverlaufs bzw. des Prozesses.

Die erste Phase beinhaltet vorzugsweise eine konstante Temperatur zum Trocknen des Kunststoffteils bis hin zu einer ersten Trocknungstiefe. Die Trocknungstemperatur während der ersten Phase kann über dem Materialschmelzpunkt wie auch unterhalb des Materialschmelzpunkts liegen. Dies ist meist abhängig von der Dimension des zu verschweissenden Kunststoffteils wie auch des Materials oder aber auch dem Feuchtigkeitsgehalt im Kunststoffteil und der optimalen Prozesszeit. Der Temperaturverlauf ist abhängig vom Material und der Dimension des Kunststoffteils wie auch vom Feuchtigkeitsgehalt und wird über eine Steuerung, der eine den vorgenannten Kriterien entsprechende mathematische Funktion hinterlegt wurde, geregelt.

Alternativ besteht auch die Möglichkeit, dass die Temperatur während der ersten Phase gesenkt wird. Das heisst, es wird mit einer höheren Ausgangstemperatur als im Vergleich bei einem konstanten Temperaturverlauf in der ersten Phase, gestartet und während der ersten Phase abgesenkt. Jedoch muss bei dieser Ausführungsform der ersten Phase die hohe Temperatur bevor der Aufschmelzprozess beginnt, reduziert werden, um die gewünschte Trocknung zu erreichen, wodurch die erste Phase zwar Zeit einsparend, aber schwierig zu regulieren ist.

Als vorteilhafte Ausgestaltung hat sich gezeigt, wenn eine zweite Phase des Temperaturverlaufs der Heizspiegeltemperatur startet, wenn sich die Stirnseite des Kunststoffteils beginnt aufzuschmelzen oder das Ende der Schmelztiefe einen vorgegebenen Abstand zum Ende der Trocknungstiefe unterschreitet, wobei in der zweiten Phase eine Temperaturerhöhung bis zum Erreichen der Schmelztemperatur erfolgt. Es können auch andere Kriterien definiert werden, die die zweite Phase startet, in der eine Temperaturerhöhung stattfindet. Die zweite Phase schliesst direkt an die erste Phase an. In der zweiten Phase werden die Zeit und die Temperatur über eine mathematische Funktion in Bezug auf das Material und/oder die Dimension des Kunststoffteils und/oder den Feuchtigkeitsgehalt im Kunststoffteil geregelt, bis zum Erreichen der Schmelztemperatur. Dadurch dass die Temperatur am Heizspiegel stetig erhöht wird, bekommt diese auch eine stetig weitere Reichweite auf die Länge bzw. die Tiefe des Kunststoffteils, so dass sich die Trocknungstiefe weiter über das Kunststoffteil erstreckt. Zudem erhöht sich die Temperatur über die Länge bzw. die Tiefe des Kunststoffteils derart, dass die Schmelztemperatur nach und nach in den weiter vom Heizspiegel beabstandeten Bereichen bzw. Tiefen ankommt und dadurch der vorausgehende Trockenbereich in einen Schmelzbereich übergeht. Dadurch entsteht der Effekt, dass der Trockenbereich dem Schmelzbereich zeitlich vorausläuft bzw. dieselbe Schmelztiefe die Trocknungstiefe zeitversetzt erreicht. Vorzugsweise erstreckt sich die Schmelztiefe am Schluss des Schweissprozesses nicht über die komplette Trocknungstiefe bzw. endet mit einem Abstand zum Ende der Trocknungstiefe.

Als vorteilhaft hat sich gezeigt, wenn während einer zweiten Phase ein funktionsabhängiger Temperaturanstieg der Heizspiegeltemperatur erfolgt. Das heisst, abhängig von der Dimension und/oder des Materials und/oder des Feuchtigkeitsgehalts des Kunststoffteils wird die Temperaturveränderung bzw. Erhöhung oder auch Reduktion über die Zeit geregelt. Bei der vorgegebenen Funktion wird berücksichtigt, dass im Zeit-Temperatur-Diagramm die Linie der Schmelztiefe die Linie der Trocknungstiefe nie überkreuzt. Das heisst, das Ende der Schmelztiefe liegt nie vor dem Ende der Trocknungstiefe bzw. es muss immer eine vollständige Trocknung erfolgt sein und dann erst startet das Aufschmelzen. Das Ende der Schmelztiefe muss vorzugsweise einen vorgegebenen Mindestabstand zum Ende der Trocknungstiefe während der zweiten Phase aufweisen. Dies ist im Diagramm dadurch ersichtlich, dass die Linie der Schmelztiefe immer unterhalb der Linie der Trocknungstiefe verläuft. Vorzugsweise wird dieses Kriterium auf den ganzen Prozess bzw. Temperaturverlauf angewandt. Somit wird mittels einer Steuerung, in welcher die mathematischen Funktionen entsprechend dem Material und/oder der Dimension und/oder des Feuchtigkeitsgehalts des Kunststoffteils hinterlegt sind, ein entsprechender Schweissvorgang durchgeführt.

Es ist vorteilhaft, wenn der funktionsabhängige Temperaturverlauf derart verläuft, dass die sich bildende Schmelze erst bildet, wenn die Trocknung in einem Bereich bzw. in der entsprechenden Tiefe vollständig erfolgt ist, wodurch die sich bildende Schmelztiefe der Trocknungstiefe zeitlich versetzt nachfolgt. Dadurch wird gewährleistet, dass bevor ein Aufschmelzen erfolgt, eine vollständige Trocknung durchgeführt wurde.

Als vorteilhafte Ausführungsform hat sich gezeigt, wenn in einer dritten Phase die Heizspiegeltemperatur auf einer optimalen Schmelztemperatur vorzugsweise konstant gehalten wird, wobei die Schmelztiefe am Kunststoffteil die Trocknungstiefe nicht überschreitet. Durch die konstante Schmelztemperatur, die über eine vorgegebene Zeit auf das Kunststoffteil vorherrscht, wird eine optimale Schmelztiefe erreicht.

Vorzugsweise wird der komplette Temperaturverlauf des Heizspiegels über eine mathematische Zeit-Temperatur Funktion gesteuert. Wobei die Funktion beinhaltet, dass die Schmelztiefe beabstandet hinter der vollständig durchgeführten Trocknungstiefe am Kunststoffteil liegt.

Alle Ausgestaltungmöglichkeiten sind untereinander frei kombinierbar.

Ein Ausführungsbeispiel der Erfindung wird anhand der Figuren beschrieben, wobei sich die Erfindung nicht nur auf das Ausführungsbeispiel beschränkt. Es zeigen:
Fig. 1 ein Zeit-Temperatur-Diagramm welches das erfindungsgemässe Verfahren zeigt bei welchem die zweite Phase startet, wenn sich die Stirnseite leicht aufzuschmelzen beginnt.
Fig. 2 ein Zeit-Temperatur-Diagramm welches das erfindungsgemässe Verfahren, bei welchem die zweite Phase startet, wenn ein vorgegebener Abstand zwischen dem Ende der Schmelztiefe und der Trocknungstiefe unterschritten wird,
Fig. 3 die sich gegenüberliegenden Enden der Kunststoffteile mit dem dazwischen angeordneten Heizspiegel und
Fig. 4 eine beispielhafte Stumpfschweissmaschine auf der das Verfahren durchgeführt werden kann.

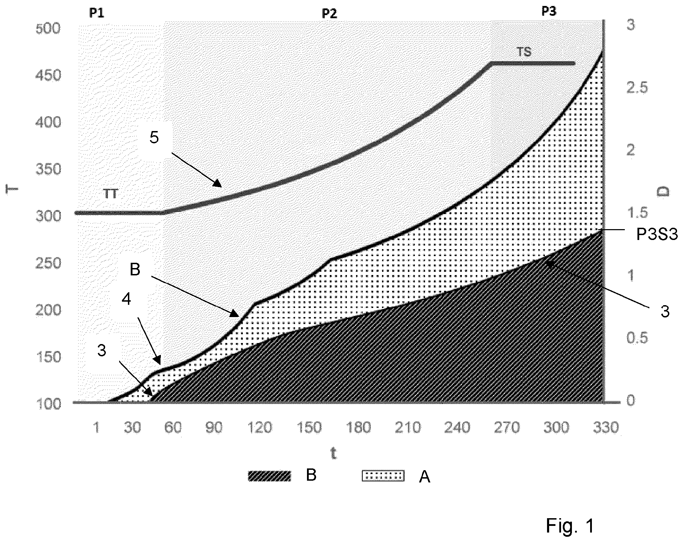

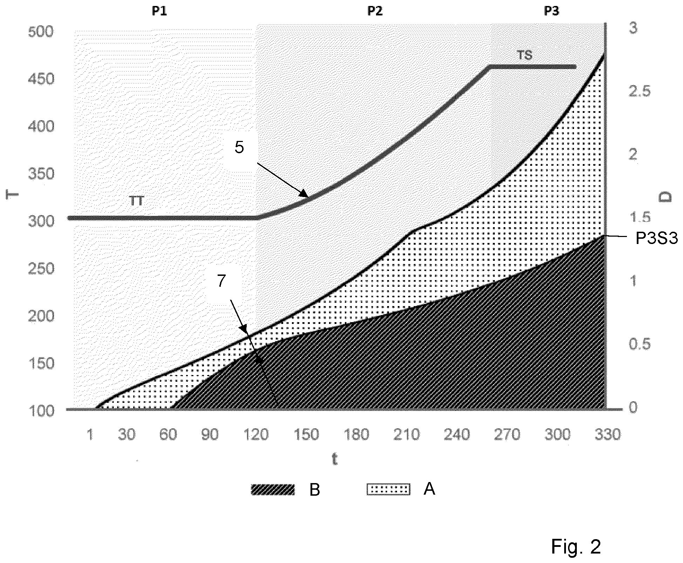

Fig. 1 und 2 zeigen ein Zeit-Temperatur-Diagramm in der einerseits der Temperaturverlauf 5 des Heizspiegels 2 dargestellt wird, wie auch die Trocken- und Schmelztiefe D am Kunststoffteil. Die Angaben über die Zeit t, Temperatur T sowie die Tiefe D sind rein beispielhaft aufgeführt und können entsprechend den zu verschweissenden Kunststoffteilen anders ausfallen als im Diagramm aufgezeigt. Die Angaben sind abhängig von den Dimensionen und/oder dem Material und/oder dem Feuchtigkeitsgehalt der Kunststoffteile. Gut ersichtlich ist aus den beiden Diagrammen, dass die Temperatur T des Heizspiegels 2, vom Start des Trocknens bis hin zum Erreichen der benötigten Schmelztemperatur TS sowie der gewünschten Schmelztiefe verändert wird, wodurch sich ein Temperaturverlauf 5 ergibt. Die Temperatur zum Trocknen TT während einer ersten Phase P1 liegt tiefer als die abschliessende Schmelztemperatur TS, dies bei beiden Figuren. Fig. 1 zeigt ein Zeit-Temperatur-Diagramm, bei dem eine zweite Phase P2 gestartet wird, wenn sich die Stirnseite aufzuschmelzen beginnt, dies ist gut ersichtlich, da die Linie der Schmelztiefe 3 bereits leicht in der ersten Phase startet. Fig. 2 zeigt ein Zeit-Temperatur-Diagramm bei dem die zweite Phase P2 startet, sobald der Abstand 7 zwischen der Linien der Schmelztiefe 3 und der Linie der Trocknungstiefe 4 einen vorgegebenen Abstand 7 unterschreitet.

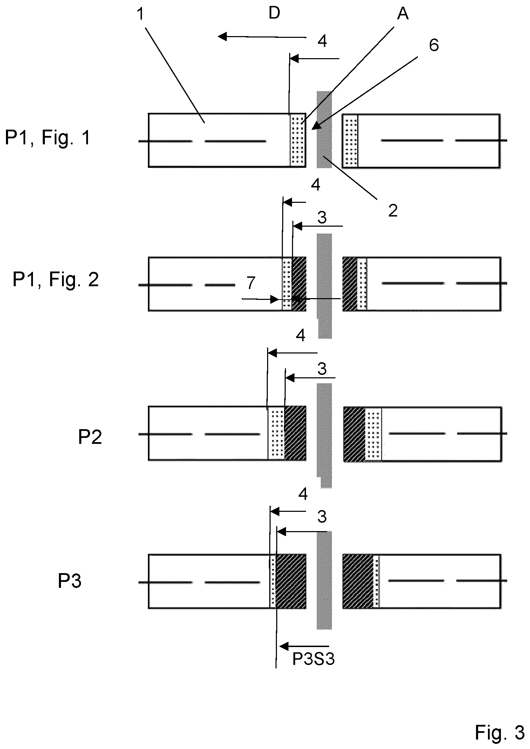

Das erfindungsgemässe Verfahren besteht vorzugsweise aus unterschiedlichen Phasen P. In der ersten Phase P1 erfolgt eine vollständige Trocknung des Kunststoffteils 1 über eine vorbestimmte Tiefe D, 4. Parallel zu den Diagrammen ist in Fig. 3 zu erkennen, wie die Tiefe D der Trocknung 4 und der Schmelze 3 am Kunststoffteil 1 voranschreitet bzw. die Enden der Trocknungs- und Schmelztiefe 4, 3 und dass die Schmelztiefe 3 immer hinter der Trocknungstiefe 4 liegt. In Fig. 1 ist ersichtlich, dass während der ersten Phase P1 die Temperatur TT zum ersten Trocknen konstant gehalten wird bis die gewünschte Trocknungstiefe D, 4, was in der ersten Abbildung in Fig. 3 erkennbar ist, erreicht ist. Wobei die erste Abbildung in Fig. 3 das leichte Aufschmelzen, welches der Auslöser des Starts für die zweite Phase P2 ist, nicht dargestellt. In der zweiten Abbildung der Fig. 3 wird das Ende der ersten Phase P1 entsprechend der Fig. 2 aufgezeigt. Gut erkennbar ist, dass die Schmelztiefe 3 schon während der ersten Phase P1 fortgeschritten ist und aufgrund des Abstands 7 zum Ende der Trocknungstiefe 4 die zweite Phase P2 gestartet wird. Welche der beiden ersten Phasen P1 angewandt wird, ist abhängig vom Material, der Dimension und/oder dem Feuchtigkeitsgehalt des Kunststoffteils 1.

Gut ersichtlich ist, dass die Phase 1 sowohl in Fig. 1 wie auch Fig. 2 ausschliesslich eine konstante Temperatur TT aufweist, die das beginnende Trocknen umfasst.

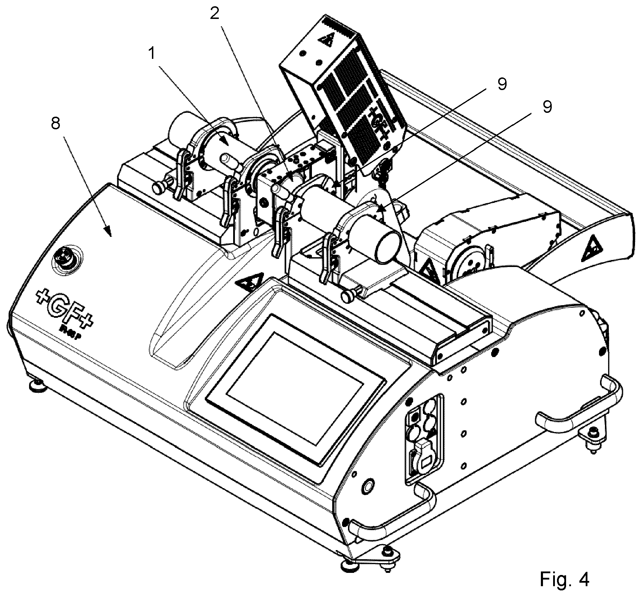

Während der zweiten Phase P2 erfolgt ein Temperaturanstieg bis hin zur definierten Schmelztemperatur TS. Der Temperarturanstieg erfolgt über eine mathematische Funktion, die aufgrund der Dimension und/oder des Materials und/oder des Feuchtigkeitsgehalts des Kunststoffteils 1 ausgelegt ist. Das heisst, jedes Kunststoffteil hat aufgrund seiner Dimension und/oder Materials und/oder des Feuchtigkeitsgehalts eine spezifische zweite Phase P2 bzw. einen Temperaturanstieg, der über eine Funktion geregelt wird. In den Diagrammen kann man gut erkennen, dass die Tiefe D des trockenen Bereichs A, 4, am Kunststoffteil 1 länger bzw. tiefer als die Schmelze B, 3 ist. Das heisst, die Funktion beinhaltet, dass die Linie des Endes der Schmelztief 3 nirgends die Linie des Endes der Trocknungstiefe 4 kreuzt. Vielmehr verläuft die Linie der Schmelztiefe 3 immer mit einem vorgegebenen Abstand 7 zur Linie des Endes der Trocknungstiefe 4, wobei der vorgegebene Abstand 7 variieren kann. Zudem läuft die Tiefe D der Schmelze 3 zeitversetzt der Tiefe D der Trockentiefe 4 hinterher, was auch in der dritten Abbildung der Fig. 3 erkennbar ist. Während der dritten Phase P3 wird die Temperatur vorzugsweise konstant auf der definierten Schmelztemperatur TS gehalten, was ein nachziehen der Schmelze bzw. der Schmelztiefe 3 ermöglicht, bis die gewünschte Tiefe D der Schmelze P3S3 erreicht ist, was aus der vierten Abbildung in Fig. 3 ersichtlich ist. Fig. 4 zeigt eine Stumpfschweissmaschine 8 mit einer Steuerung, auf der ein erfindungsgemässes Verfahren durchgeführt wird mit den in die Spannstellen 9 eingespannten Kunststoffteilen 1 sowie dem Heizspiegel 6.

### Bezugszeichenliste

- 1: Kunststoffteil
- 2: Heizspiegel
- 3: Schmelztiefe / Ende Schmelztiefe
- 4: Trocknungstiefe / Ende Schmelztiefe
- 5: Temperaturverlauf Heizspiegel
- 6: Stirnseite
- 7: Abstand
- 8: Stumpfschweissmaschine
- 9: Spannvorrichtung

- D: Tiefe (Trocknungs- und Schmelztiefe)
- P1: erste Phase
- P2: zweite Phase
- P3: dritte Phase
- TT: Temperatur Trocknung
- P3S3: Abschliessende Schmelztiefe
- TS: Schmelztemperatur 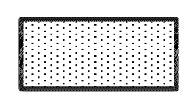
Trockener Bereich A 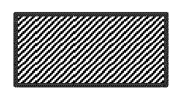 Schmelze B

## Patentansprüche

1. Verfahren zum Verschweissen von hygroskopischen Kunststoffteilen (1) vorzugsweise Rohrleitungskomponenten mittels einer Stumpfschweissmaschine, wobei die beiden Kunststoffteile (1) in koaxialer Lage zueinander mittels Spannvorrichtung (9) eingespannt und fixiert werden, wobei die sich gegenüberliegenden Stirnseiten der Kunststoffteile (1) mittels eines dazwischen bringbaren Hobels plangehobelt werden und die Kunststoffteilenden (1) mittels eines dazwischen bringbaren Heizspiegels (2) getrocknet und aufgeschmolzen werden, wobei anschliessend an das Aufschmelzen, die Kunststoffteilenden (1) zusammengefügt werden, **dadurch gekennzeichnet, dass** sich die Temperatur des Heizspiegels (2) vom Trocknen bis hin zum Erreichen der abschliessenden Schmelztemperatur (TS) verändert.

2. Verfahren nach Anspruch 1 **dadurch gekennzeichnet, dass** die Temperatur des Heizspiegels (2) konstant überwacht und geregelt wird.

3. Verfahren nach einem der Ansprüche 1 oder 2, **dadurch gekennzeichnet, dass** die Temperatur des Heizspiegels (2) über separat regelbare Heizzonen am Heizspiegel (2) geregelt wird.

4. Verfahren nach einem der Ansprüche 1 bis 3, **dadurch gekennzeichnet, dass** der Temperaturverlauf (5) der Heizspiegeltemperatur vom Trocknen bis hin zum Erreichen der Schmelztiefe (3) ansteigt.

5. Verfahren nach einem der Ansprüche 1 bis 4, **dadurch gekennzeichnet, dass** der Temperaturverlauf (5) der Heizspiegeltemperatur vom Beginn des Trocknens bis hin zur geforderten abschliessenden Schmelztiefe (3) unterschiedliche Phasen aufweist.

6. Verfahren nach Anspruch 5, **dadurch gekennzeichnet, dass** während einer ersten Phase (P1) die Trocknung (4) des Kunststoffteils von der Stirnseite (6) bis zu einer ersten Trocknungstiefe (4) erfolgt.

7. Verfahren nach einem der Ansprüche 5 oder 6, **dadurch gekennzeichnet, dass** die Temperatur (TT) des Heizspiegels (2) während einer ersten Phase (P1) konstant gehalten wird.

8. Verfahren nach einem der Ansprüche 1 bis 7, **dadurch gekennzeichnet, dass** die Temperatur des Heizspiegels (2) in einer zweiten Phase (P2) ansteigt.

9. Verfahren nach einem der Ansprüche 5 bis 8, **dadurch gekennzeichnet, dass** eine zweite Phase (P2) des Temperaturverlaufs (5) der Heizspiegeltemperatur startet, wenn sich die Stirnseite des Kunststoffteils (1) beginnt aufzuschmelzen oder das Ende der Schmelztiefe einen vorgegebenen Abstand zum Ende der Trockentiefe unterschreitet, wobei in der zweiten Phase (2) eine Temperaturerhöhung erfolgt.

10. Verfahren nach einem der Ansprüche 5 bis 9, **dadurch gekennzeichnet, dass** während einer zweiten Phase (P2) ein funktionsabhängiger Temperaturanstieg der Heizspiegeltemperatur (2) erfolgt.

11. Verfahren nach Anspruch 10, **dadurch gekennzeichnet, dass** der funktionsabhängige Temperaturverlauf (5) derart verläuft, dass die sich bildende Schmelze sich erst bildet, wenn die Trocknung vollständig erfolgt ist, wodurch die sich bildende Schmelztiefe (3) der Trocknungstiefe (4) zeitlich versetzt nachfolgt.

12. Verfahren nach einem der Ansprüche 5 bis 11, **dadurch gekennzeichnet, dass** in einer dritten Phase (P3) die Heizspiegeltemperatur auf einer optimalen Schmelztemperatur (TS) gehalten wird, wobei die Schmelztiefe (3) am Kunststoffteile die Trocknungstiefe (4) nicht überschreitet bzw. überragt.
